# EUROPEAN PATENT SPECIFICATION

(11) **EP 1 199 410 B1**
(45) Date of publication and mention of the grant of the patent: **25.01.2006**
(21) Application number: 00940842.8
(22) Date of filing: 27.06.2000
(51) Int. Cl.: F15B 11/00, H02K 9/19, E02F 9/08

(54) **CONSTRUCTION MACHINE**
BAUMASCHINE
MACHINE DE CONSTRUCTION

(30) Priority: 30.06.1999 JP 18522799
(43) Date of publication of application: 24.04.2002
(73) Proprietor: KOBELCO CONSTRUCTION MACHINERY CO., LTD., Hiroshima-shi, Hiroshima 731-0138 (JP)
(72) Inventor: KINUGAWA, Hideki, Hiroshima-shi, Hiroshima 731-0138 (JP); KOMIYAMA, Masayuki, Hiroshima-shi, Hiroshima 731-0138 (JP)
(74) Representative: TBK-Patent
(86) International application number: PCT/JP2000/004191
(87) International publication number: WO 2001/000933

(56) References cited:
- DE-A- 4 333 613
- JP-A- 8 027 835
- JP-A- 8 158 404

## Description

### TECHNICAL FIELD

The present invention relates to a construction machine such as an excavator, for example, having an electric motor used as a driving source.

### BACKGROUND

In the past, in a general excavator called a hydraulic excavator, a lower traveling body (normally, a crawler) is equipped with an upper rotating body, and an excavating attachment provided with a boom, an arm, and a bucket is mounted on the upper rotating body. An engine is provided on the upper rotating body, a hydraulic pump is driven by the engine as a driving source, and a discharge oil out of the pump is supplied to a hydraulic actuator (a hydraulic motor or a hydraulic cylinder) so as to carry out traveling, rotating, boom raising and lowering, arm operating, and bucket operating.

However, in the above conventional hydraulic excavator, there arises the problem that the burden on the engine is so heavy that fuel cost is poor, and of the exhaust gases and noises.

In the light of the foregoing, the applicant himself proposes the electric motor drive system in which a hydraulic pump is driven by an electric motor to actuate a hydraulic actuator. In the case of the electric motor drive system, as a power source of the electric motor, a generator driven by the engine or a battery is used.

However, the excavator of the above-described electric motor drive system is equipped, in addition to the engine, with many electric parts such as a battery, an electric motor and a generator.

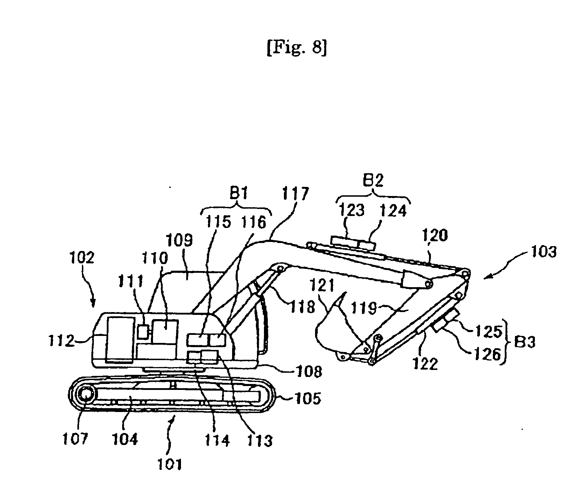

Fig. 8 is a front view showing the constitution of the conventional whole excavator of the electric motor drive system.

This excavator is provided with a lower traveling body 101, an upper rotating body 102, and an excavating attachment 103 mounted on the front of the upper rotating body 102. The lower traveling body 101 comprises left and right crawler frames 104 and crawlers 105 (in both of which, only the one side is shown), and both the crawlers 105 are driven individually by left and right electric motors (only one side is shown) 107 for traveling.

The upper rotating body 102 comprises a rotating frame 108 and a cabin 109, etc., and on the rotating frame 108 are installed an engine 110 as a driving source, a generator 111 driven by the engine 110, a battery 112, a rotating electric motor 113, a reduction gear 114 for reducing the rotational force of the rotating electric motor 113 to transmit it to a rotating mechanism (a rotating gear), an electric motor for a boom 115, and a hydraulic pump for a boom 116 driven by the electric motor for a boom 115.

The excavating attachment 103 comprises a boom 117, a boom cylinder 118 which is operated to be expanded or contracted by pressure oil from the boom pump 116 to raise and lower the boom 117, an arm 119, an arm cylinder 120 for turning the arm 119, a bucket 121, and a bucket cylinder 122 for operating the bucket 121.

In the excavating attachment 103, an electric motor for an arm123 and a hydraulic pump for an arm 124 driven by the electric motor 123 are provided on the arm cylinder 120; and an electric motor for a bucket 125 and a hydraulic pump for a bucket 126 driven by the electric motor 125 are provided on the bucket cylinder 122.

A unit comprising the electric motor for a boom 115 and the hydraulic pump for a boom 116, a unit comprising the electric motor for an arm 123 and the hydraulic pump for an arm 124, and a unit comprising the electric motor for a bucket 125 and the hydraulic pump for a bucket 126 are constituted as integrated actuators B1, B2, and B3, respectively

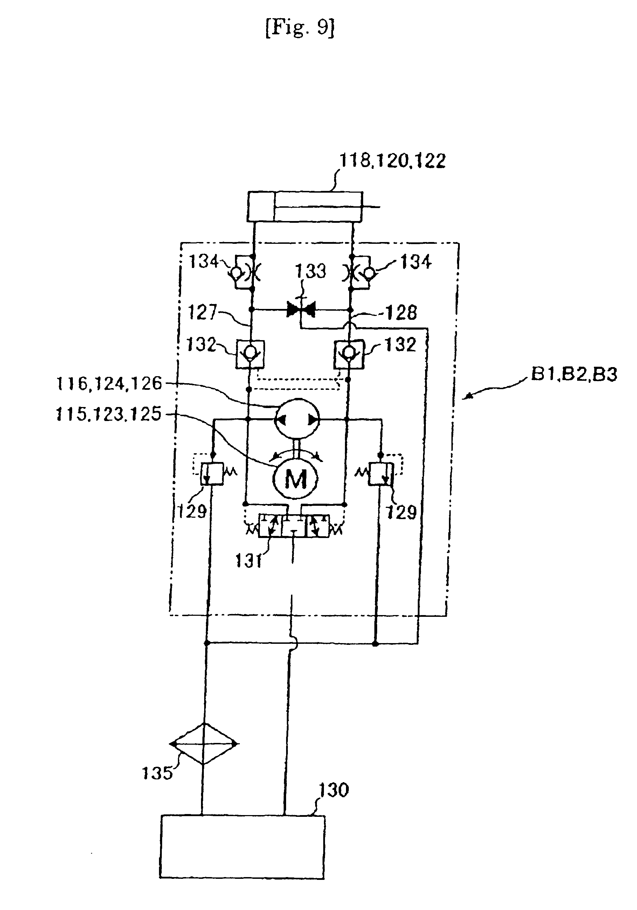

Fig. 9 shows the constitution of the integrated actuators B1, B2, and B3. The pumps 116, 124, and 126 are constituted as a bi-directional pump in which a discharge direction of oil is switched according to the rotational direction of the electric motors 115, 123, and 125, and both discharge ports of the pumps 116, 124, and 126 are connected to the head-side and rod-side oil chambers of the cylinders 118, 120, and 122 through pipes 127 and 128. In Fig. 9, reference numeral 129 designates a relief valve; 130 an oil tank; 135 an oil cooler; 131 an automatic switching valve provided between the pumps 116, 124, 126 and the oil tank 130; 132 an operate check valve; 133 a manual open-close valve provided between the both the pipes 127 and 128; and 134 a slow return valve.

In the above actuator, oil (actuating oil) returning to the oil tank 130 is cooled by the oil cooler 135 for use. More specifically, oil of the oil tank 130 is sent to the pump (116, 124, 126) →cylinder (118, 120, 122) →relief valve (129) →oil cooler (135) →oil tank (130).

Incidentally, the electric parts such as the electric motors 107, 113, 115, 123, 125, the generator 111, and the battery 112 are not constituted to be cooled forcibly. Therefore, there arises the problem that the service life of these electric parts is lowered for the reasons below.

The first reason is that since a large current is supplied from the generator 111 and the battery 112 to the electric motor 107 or the like, the battery 112, the electric motor 107 and the generator 111 are generated in heat, and in addition, the temperature thereof becomes high.

The second reason is that heat generated in the engine 110 is transmitted around whereby the temperatures of the battery 112, the electric motor 107 and the generator 111 rise.

The present invention has been accomplished to solve the problems noted above with respect to prior art, and has its object to provide a construction machine of the electric motor drive system wherein the service life (lifetime) of the electric parts such as an electric motor can be extended by the simple constitution.

### DISCLOSURE OF THE INVENTION

The present invention provides a construction machine provided with an electric motor drive system in which a hydraulic pump is driven by an electric motor, and a hydraulic actuator is driven by the hydraulic pump, comprising electric parts cooling means for cooling electric parts provided on the construction machine by working oil for operating the hydraulic actuator.

In the case of the above constitution, since the electric parts are cooled, shortening of the service life can be prevented, and the service life of the electric parts can be extended. Further, since working oil for operating the hydraulic actuator is used for cooling, pipes or cooling jackets will suffice to be merely added, and the construction machine of the electric motor drive system capable of cooling the electric parts can be realized by the simple constitution.

In the construction machine according to the present invention, the above electric parts are constituted by one or more than two out of the electric motor, a generator which functions as a power supply for the electric motor, a battery which functions as a power supply for the electric motor, and an electrically driven actuator driven by the electric motor.

With the above constitution, any of the electric motor, the generator, the battery and the electrically driven actuator, which are various electric parts necessary for the construction machine of the electric motor drive system may be cooled to achieve the longer service life.

Further, in the construction machine according to the present invention, the above electric parts cooling means can be constituted such that an oil cooler for cooling the working oil is provided, and the working oil cooled through the oil cooler is supplied to the electric parts immediately.

With the above constitution, the working oil contributed to cooling of the electric parts is cool oil cooled by the oil cooler, and since the cool working oil is supplied to the electric parts immediately, the working oil is not heated by the hydraulic actuator, but the electric parts can be cooled. Therefore, the cooling efficiency of the electric parts can be enhanced.

Further, in the construction machine according to the present invention, the above electric parts cooling means comprises an electric parts cooling pipe branched from a driving pipe of said hydraulic actuator to send working oil to the electric parts including a battery, a pressure control valve provided on the electric parts cooling pipe, switching means for switching for switching in between the state for supplying working oil from the hydraulic pump to the actuator driving pipe and the state for supplying to the electric parts cooling pipe, and a temperature sensor for sensing and detecting a temperature of the battery, the switching means circulating and supplying working oil to the electric parts cooling pipe when the battery temperature is below a set temperature.

With the above constitution, in the case where the battery temperature is below the set temperature, the switching means assumes the state that working oil is circulated and supplied merely to the electric parts cooling pipe. Thereby, the temperature of the working oil rises due to the action of the pressure control valve provided on the electric parts cooling pipe. At that time, the working oil is somewhat cooled by the oil cooler, but the battery is subjected to warming up. It is possible to increase the output of the battery due to the warming up of the battery.

Further, in the construction machine according to the present invention, the electric parts cooling means can be constituted such that working oil is supplied directly from a tank storing the working oil to at least one out of the electric motor, the generator, the battery and the electrically driven actuator, whereby the electric parts can be cooled.

With the above constitution, it is possible to supply cooling work oil to the electric parts to be cooled not relying upon the discharge force caused by the hydraulic pump. Further, since the discharge force is unnecessary, parts contained in the pipe, for example, a port itself or a connected part between the port and the pipe can be prevented from deterioration.

### BRIEF DESCRIPTION OF THE DRAWINGS

Fig. 1 is a front view showing the constitution of the whole excavator according to a first and a second embodiments;
Fig. 2 is a hydraulic circuit view showing the constitution of an integrated type actuator provided on the excavator according to the first embodiment;
Fig. 3 is an external perspective view showing an oil cooler provided on the excavator according to the first and second embodiments;
Fig. 4 is a front sectional view showing the constitution of a battery provided on the excavator according to the first and second embodiments;
Fig. 5(a) is a front view of an electric motor (including a generator) provided on the excavator according to the first and second embodiments, and Fig. 5(b) is a side view thereof;
Fig. 6 is a hydraulic circuit view showing the constitution of an integrated type actuator provided on the excavator according to the second embodiment;
Figs. 7(a) and (b) are respectively schematic views (front views) with respect to the height relation between an oil tank and an electric motor in the present invention;
Fig. 8 is a front view showing the constitution of the whole excavator for explaining prior art; and
Fig. 9 is a hydraulic circuit view showing the constitution of an integrated type actuator provided on the excavator of Fig. 8.

### BEST MODE FOR CARRYING OUT THE INVENTION

The embodiments of the present invention will be described hereinafter.

### (First Embodiment)

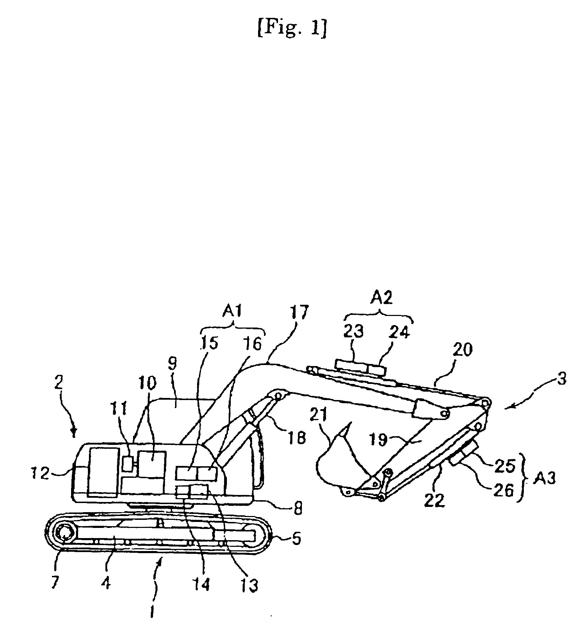

Fig. 1 is a front view showing the constitution of the whole excavator according to the embodiment.

This excavator comprises a lower traveling body 1, an upper rotating body 2, and an excavating attachment 3 mounted on the front of the upper rotating body 2.

The lower traveling body 1 comprises left and right crawler frames 4 and crawlers 5 (only one side thereof is shown), and both crawlers 5 are driven individually by left and right traveling electric motors (only right side is shown) 7 for traveling.

The upper rotating body 2 comprises a rotating frame 8, a cabin 9 and so on, and on the rotating frame 8 are installed an engine 10 as a driving source, a generator 11 driven by the engine 10, a battery 12, a rotating electric motor 13, a reduction gear 14 for reducing the rotational force of the rotating electric motor 13 to transmit it to a rotating mechanism (a rotating gear), an electric motor for a boom 15, and a hydraulic pump 16 for a boom driven by the electric motor for a boom 15.

The excavating attachment 3 comprises a boom 17, a boom cylinder 18 expanded or contracted by pressure oil from the hydraulic pump for a boom 16 to raise and lower the boom 17, an arm 19, an arm cylinder 20 for turning the arm 19, a bucket 21, and a bucket cylinder 22 for operating the bucket 21.

In the excavating attachment 3, an electric motor for an arm 23, and a hydraulic pump for an arm 24 driven thereby are provided on the arm cylinder 20, and an electric motor for a bucket 25 and a hydraulic pump for a bucket 26 driven thereby are provided on the bucket cylinder 22.

A unit comprisihg the electric motor for a boom 15 and the hydraulic pump for a boom 16, a unit comprising the electric motor for an arm 23 and the hydraulic pump for an arm 24, and a unit comprising the electric motor for a bucket 25 and the hydraulic pump for a bucket 26 are constituted as integrated actuators A1, A2 and A3, respectively.

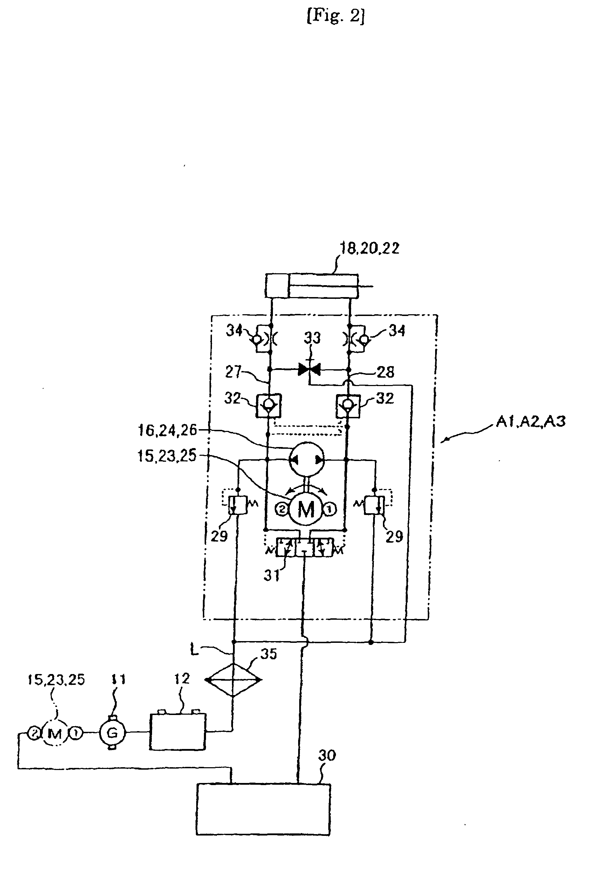

Fig. 2 shows the constitution of the integrated actuators A1, A2 and A3. The pumps 16, 24, and 26 are constituted as a bi-directional pump in which the discharge direction of oil is switched according to the rotational direction of the electric motors 15, 23 and 25, and both discharge ports of the pumps 16, 24 and 26 are connected to the head side and rod side oil chambers of the cylinders 18, 20 and 22 through actuator driving pipes 27 and 28. In Fig. 2, reference numeral 29 designates a relief valve; 30 an oil tank; 31 an automatic switching valve provided between the pumps 16, 24 and 26 and the oil tank 30; 32 an operate check valve; 33 a manual open-close valve provided between both pipes 27 and 28; and 34 s slow return valve.

An oil cooler 35 is provided on a return pipeline L having the relief valve 29, and oil cooled by an oil cooler 35 is returned to the oil tank 30 after passing through the battery 12, the generator 11 and the electric motors 15, 23 and 25. While in Fig. 2, the electric motors 15, 23 and 25 indicated by the solid line and those indicated by the dash-dotted contour lines are shown, both are the same electric motors. Further, while ① and ② are indicated on left and right sides thereof, ① indicates an oil inlet described later, and ② indicates an oil outlet described later.

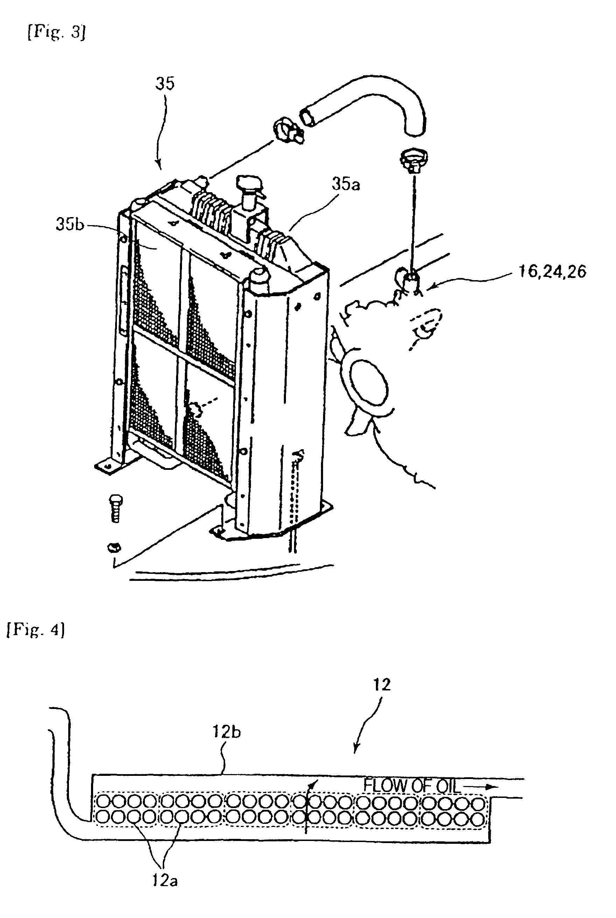

Fig. 3 is an external perspective view showing a portion of an oil cooler. An oil cooler 35 comprises a radiator 35a to which is supplied oil from the hydraulic pumps 16, 24 and 26, and a cooling portion 35b, and oil passing through the radiator 35a is cooled by the cooling portion 35b.

Fig. 4 is a front sectional view schematically showing the construction of the battery cooled by oil. The battery 12 is constructed such that a plurality of battery modules 12a constituting the battery 12 are disposed laterally inside a box body 12b in the state of floating in the air, and oil flows outside and inside of the battery modules 12a to cool the battery modules 12a.

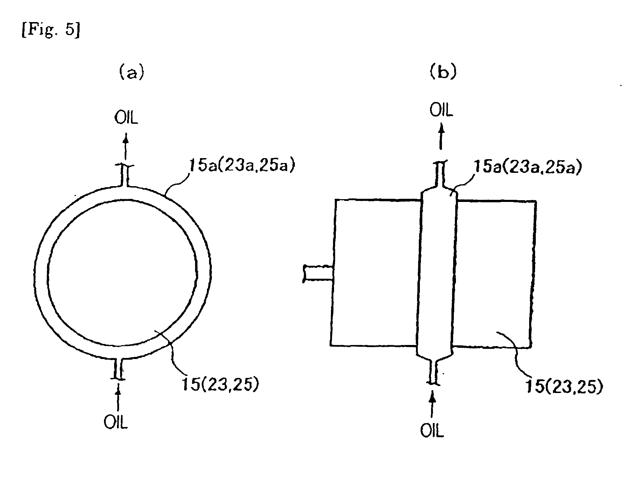

Fig. 5 is a front sectional view schematically showing the construction of the electric motors 15, 23 and 25 cooled by oil. More specifically, the electric motors 15, 23 and 25 are provided externally with oil jackets 15a, 23a and 25a in the circumferential direction, and oil is supplied from the inlet (① shown in Fig. 2) and oil is discharged from the outlet (② shown in Fig. 2) to thereby cool the electric motor 15 and the like. The generator 11 has also the same construction as mentioned above, which is cooled by oil from outside.

Accordingly, in the case of the first embodiment, since the electric parts such as the battery 12, the generator 11 and the electric motors 15, 23 and 25 are cooled forcibly by oil, the service life can be prevented from shortening, and the service life of the electric parts can be extended. Further, for the purpose of cooling, working oil (oil) for operating the cylinders 18, 20 and 22 as the hydraulic actuators is used, and therefore, the pipes and the cooling jackets will suffice to be added merely to the existing constitution, and a cooling device for the electric parts can be realized by the simple constitution.

### (Second Embodiment)

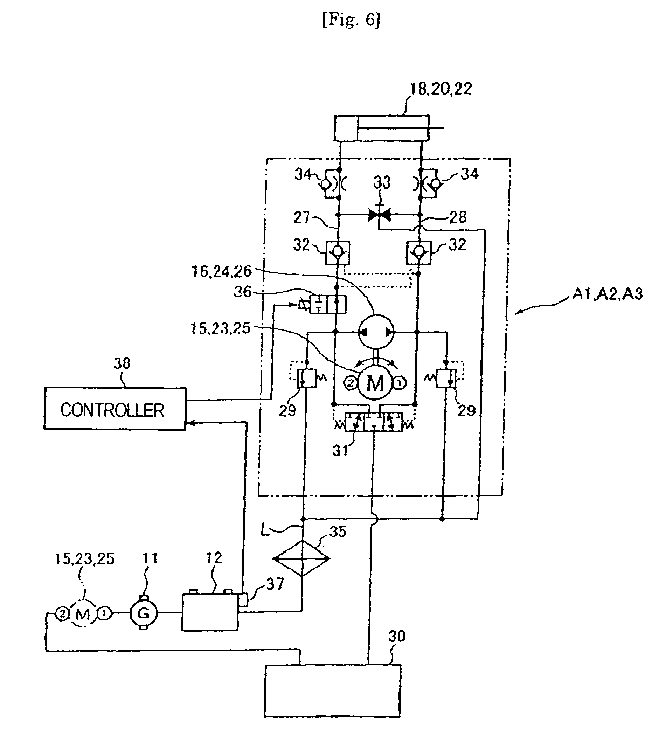

Fig. 6 is a hydraulic circuit view showing the constitution of an integrated actuator provided on the excavator according to a second embodiment. Note that the same parts as those shown in Fig. 2 are indicated by the same reference numerals.

In the present embodiment, as shown in Fig. 6, a solenoid switching valve 36 is disposed at an upstream position of a cylinder head side pipe 27 out of actuator driving pipes 27 and 28. The solenoid switching valve 36 is constituted to switch to and from the state for supplying oil from the hydraulic pumps 16, 24 and 26 to the hydraulic cylinders 18, 20 and 22 and the closed state for stopping the supply, and such a switching is controlled by a controller 38. The controller 38 and the solenoid switching valve 36 constitute switching means.

The battery 12 is provided with a temperature sensor 37. A detected temperature of the battery by the temperature sensor 37 is given to the controller 38. When the detected temperature is a first temperature, for example, not more than 20 °C , the controller 38 switches the solenoid switching valve 36 to the closed state to supply oil from the hydraulic pumps 16, 24 and 26 to the return pipeline L which functions as the electric parts cooling pipeline. Further, in the case of a second temperature higher than the first temperature, for example, not less than 25°C, switching is made to the state that oil from the hydraulic pumps 16, 24 and 26 are supplied to the hydraulic cylinders 18, 20 and 22 through the actuator driving pipes 27 and 28.

In the second embodiment constructed as described above, in the case where the temperature of the battery 12 detected by the temperature sensor 37 is not more than 20°C, the controller 38 switches the solenoid switching valve 36 to the closed state. This assumes the state that oil is supplied to the return pipeline L, and the state that oil is not supplied to the cylinder head side pipe 27. Then, when the pressure of oil fed from the hydraulic pumps, 16, 24 and 26 increases, the relief valve 29 as a pressure control valve is actuated so that oil is supplied to the return pipeline L, that is, the electric parts side to be cooled, and is circulated by the hydraulic pumps 16, 24 and 26. Afterward, the temperature of oil rises. At this time, oil is somewhat cooled by the oil cooler 35, but the battery 12 is subjected to warming up. And, in the case where the temperature of the battery 12 detected by the temperature sensor 37 is not less than 25°C, the controller 38 switches the solenoid switching valve 36 to the state that oil from the hydraulic pumps 16, 24 and 26 is supplied to the hydraulic cylinders 18, 20 and 22.

In the case where the battery is subjected to warming up as described above, for example, at the engine start of the excavator, the output of the battery can be increased.

It is noted that while in the second embodiment, the solenoid switching valve 36 is used, even the constitution of using a switching valve of the type other than the solenoid type, the invention can be carried out.

Further, while in the second embodiment, the electric parts to be cooled are provided in the return pipeline L having the relief valve 29, the present invention is not limited thereto, but the electric parts cooling pipeline having a pressure control valve separately from the relief valve 29 may be provided separately from the pipeline L. In this case, in the switching by way of the switching means, switching valves are provided, for example, on the cylinder head side pipe 27 and the electric parts cooling pipe, respectively, so that these switching valves may be operated in association with each other.

Further, while in the first and the second embodiments, the height relation between the electric motors 15, 23 and 25, the hydraulic pumps 16, 24 and 26 and the oil tank 30 is not clearly shown, the following is preferable.

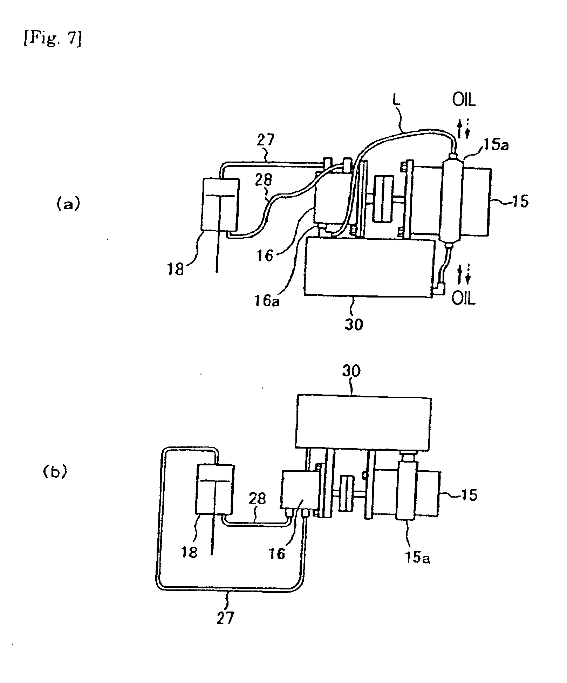

Fig. 7(a) is a schematic front view in the case where an oil tank 30 is provided on the lower side, and Fig. 7(b) is a schematic front view in the case where an oil tank 30 is provided on the upper side. However, Figs. 7(a) and 7(b) show an example of cooling only the electric motor. Further, members not used for explanation, for example, such as an oil cooler, are not shown in Figs. 7(a) and 7(b).

In the case shown in Fig. 7(a), since the electric motor 15 is provided on the upper side of the oil tank 30, it is necessary to return oil from the oil tank 30 via a port 16a corresponding to the discharge port for performing suction and discharge in the hydraulic pump 16, feed it to the pipeline L, and supply it to the oil jacket 15a of the electric motor 15 to cool the electric motor 15. This constitution is similar to those of Fig. 2 and Fig. 6.

On the other hand, in the case shown in Fig. 7(b), since the electric motor 15 is provided on the lower side of the oil tank 30, oil from the oil tank 30 passes by the oil jacket 15a of the electric motor 15 without imparting the discharge force. In this case, the electric parts cooling pipeline can be omitted.

Accordingly, since in the case of Fig. 7(a), oil is fed by the discharge force caused by the pump pressure, the cooling efficiency is higher than that of the case shown in Fig. 7(b), but it is feared that pressure is applied to the port 16a due to the pipe resistance. On the other hand, in the case of Fig. 7(b), the cooling efficiency is low by portion in which cooling oil is not circulated by pressure, but the port 16a need not be provided as in Fig. 7(a), and besides, the pressure is not applied to the port 16a as in Fig. 7(a). Therefore, by selecting the enhancement of the cooling efficiency or selecting the lowering of pressure applied to the port 16a, the constitution of Fig. 7(a) or the constitution of Fig. 7(b) may be selected.

While Fig. 7 shows an example of cooling the electric motor, it is of course that the constitution may be employed in which the generator or the battery in place of the electric motor, or not less than two out of them are cooled simultaneously. Further, the oil tank 30 may be provided common to a plurality of integrated actuators, or may be provided every integrated actuator.

Further, while in the aforementioned first and second embodiments, three electric motors 15, 23 and 25 out of six electric motors are cooled, it is noted that the present invention is not limited thereto but preferably, the remaining electric motors, that is, the right travel electric motor 7, a left travel electric motor not shown, and the rotating electric motor 13 may be also cooled.

Further, while in the aforementioned first and second embodiments, with respect to the electric motor, the generator and the battery which are the electric parts to be cooled, cooling is done in order of the battery →the generator →the electric motor, the present invention is not limited to that cooling order. Further, while in the present invention, oil passing through the electric parts cooling piping is fed to the electric parts in order, it is of course that the pipes for feeding oil to the electric parts may be provided in parallel with the electric parts cooling pipeline.

Moreover, while in the first and second embodiments, the electric motor, the generator and the battery are cooled by working oil, the present invention is not limited thereto, but one or not less than two out of the electric motor, the generator and the battery may be cooled. Further, an electrically driven actuator driven by the electric motor, other than the electric motor, the generator and the battery, can be also cooled.

Furthermore, while in the first and second embodiments, the present invention is applied to the excavator, the present invention is not limited thereto, but can be also applied likewise to general construction machines, such as a wheel excavator, a crane, a wheel loader and so on.

### INDUSTRIAL APPLICABILITY

As described above, the construction machine according to the present invention is suited to extend the service life (lifetime) of electric parts, particularly, an electric motor, a generator and a battery provided on general construction machines such as an excavator such as a hydraulic excavator, a wheel excavator, a crane, a wheel loader and so on.

## Claims

1. A construction machine provided with an electric motor drive system in which a hydraulic pump is driven by an electric motor, and a hydraulic actuator is driven by the hydraulic pump, comprising
electric parts cooling means for cooling electric parts provided on the construction machine by working oil for operating said hydraulic actuator.

2. The construction machine according to claim 1, wherein said electric parts are one or more out of said electric motor, a generator which functions as a power supply for the electric motor, a battery which functions as a power supply for the electric motor, and an electrically driven actuator driven by the electric motor.

3. The construction machine according to claim 1 or 2, wherein said electric parts cooling means has an oil cooler for cooling said working oil is provided, and working oil cooled through the oil cooler is supplied to said electric parts immediately.

4. The construction machine according to claim 2 or 3, wherein said electric parts cooling means comprises an electric parts cooling pipe branched from a driving pipe of said hydraulic actuator to send working oil to the electric parts including a battery, a pressure control valve provided on the electric parts cooling pipe, switching means for switching in the state for supplying working oil from the hydraulic pump to said actuator driving pipe and the state for supplying to the electric parts cooling pipe, and a temperature sensor for detecting a temperature of said battery,
said switching means circulating and supplying the working oil to the electric parts cooling pipe when the temperature of said battery is below a set temperature.

5. The construction machine according to claim 2, wherein said electric parts cooling means is constituted such that the working oil is supplied directly from a tank storing the working oil to at least one out of electric parts comprising the electric motor, the generator, the battery and the electrically driven actuator, whereby said electric parts are cooled.

## Patentansprüche

1. Baumaschine mit einem Elektromotorantriebssystem, bei dem eine Hydraulikpumpe mittels eines Elektromotors angetrieben wird und ein Hydraulikstellglied mittels der Hydraulikpumpe angetrieben wird, umfassend
eine Kühleinrichtung zur Kühlung der an der Baumaschine vorgesehenen elektrischen Teile mittels des Betriebsöls für den Betrieb des Hydraulikstellglieds.

2. Baumaschine nach Anspruch 1, wobei die elektrischen Teile eins oder mehrere Teile außerhalb des Elektromotors, ein Generator als Energieversorgung für den Elektromotor, eine Batterie als Energieversorgung für den Elektromotor und ein von dem Elektromotor elektrisch angetriebenes Stellglied sind.

3. Baumaschine nach Anspruch 1 oder 2, wobei eine Kühleinrichtung für die elektrischen Teile einen Ölkühler zur Kühlung des Betriebsöls aufweist, und das durch den Ölkühler gekühlte Betriebsöl unmittelbar den elektrischen Teilen zugeführt wird.

4. Baumaschine nach Anspruch 2 oder 3, wobei die Kühleinrichtung für die elektrischen Teile eine Kühlleitung für die elektrischen Teile aufweist, die von der Antriebsleitung des Hydraulikstellglieds zur Zuführung des Betriebsöls zu den elektrischen Teilen, einschließlich einer Batterie, einem an der Kühlleitung für die elektrischen Teile vorgesehenen Drucksteuerventil, einer Schalteinrichtung zum Schalten eines Zustandes zur Zuführung des Betriebsöls von der Hydraulikpumpe zu der Antriebsleitung für das Stellglied und einen Zustand zur Zuführung zur Kühlleitung für die elektrischen Teile und einen Temperatursensor zur Erfassung einer Batterietemperatur umfasst, wobei die Schalteinrichtung das Betriebsöl zu der Kühlleitung für die elektrischen Teile zuführt und zirkuliert, wenn die Batterietemperatur unterhalb einer Soll-Temperatur liegt.

5. Baumaschine nach Anspruch 2, wobei die Kühleinrichtung für die elektrischen Teile so aufgebaut ist, dass das Betriebsöl von einem das Betriebsöl speichernden Tank direkt zumindestens einem der elektrischen Teile, umfassend den Elektromotor, den Generator, die Batterie und das elektrisch angetriebene Stellglied zugeführt wird, wodurch die elektrischen Teile gekühlt werden.

## Revendications

1. Machine de construction dotée d'un système d'entraînement de moteur électrique dans lequel une pompe hydraulique est entraînée par un moteur électrique, et un actionneur hydraulique est entraîné par la pompe hydraulique, comprenant :
des moyens de refroidissement de pièces électriques pour refroidir des pièces électriques prévues sur la machine de construction par l'huile de travail pour actionner ledit actionneur hydraulique.

2. Machine de construction selon la revendication 1, dans laquelle lesdites pièces électriques sont une ou plusieurs parmi ledit moteur électrique, un générateur qui fonctionne comme une alimentation de puissance pour le moteur électrique, une batterie qui fonctionne comme une alimentation de puissance pour le moteur électrique et un actionneur électrique entraîné par le moteur électrique.

3. Machine de construction selon la revendication 1 ou 2, dans laquelle on prévoit lesdits moyens de refroidissement de pièces électriques qui comprennent un refroidisseur d'huile pour refroidir ladite huile de travail, et l'huile de travail refroidie par le refroidisseur d'huile est alimentée immédiatement auxdites pièces électriques.

4. Machine de construction selon la revendication 2 ou 3, dans laquelle lesdits moyens de refroidissement de pièces électriques comprennent un tuyau de refroidissement de pièces électriques branché sur un tuyau d'entraînement dudit actionneur hydraulique pour envoyer l'huile de travail vers les pièces électriques comprenant une batterie, une soupape de régulation de pression prévue sur le tuyau de refroidissement de pièces électriques, des moyens de commutation pour commuter dans l'état dans lequel on alimente l'huile de travail de la pompe hydraulique audit tuyau d'entraînement d'actionneur et l'état dans lequel on alimente vers le tuyau de refroidissement de pièces électriques et un capteur de température pour détecter une température de ladite batterie,
lesdits moyens de commutation faisant circuler et alimentant l'huile de travail au tuyau de refroidissement de pièces électriques lorsque la température de ladite batterie est au dessous d'une température prédéterminée.

5. Machine de construction selon la revendication 2, dans laquelle lesdits moyens de refroidissement de pièces électriques sont constitués de sorte que l'huile de travail est alimentée directement d'un réservoir stockant l'huile de travail à au moins l'un parmi les pièces électriques comprenant le moteur électrique, le générateur, la batterie et l'actionneur électrique, moyennant quoi lesdites pièces électriques sont refroidies.
